# EUROPÄISCHE PATENTSCHRIFT

(11) **EP 1 103 879 B1**
(45) Veröffentlichungstag und Bekanntmachung des Hinweises auf die Patenterteilung: **11.12.2002**
(21) Anmeldenummer: 00202466.9
(22) Anmeldetag: 11.07.2000
(51) Int. Cl.: G05D 23/02, F25B 41/06, F16K 31/00

(54) **Betätigungsaufsatz für ein Ventil**
Valve setting element
Dispositif de règlage de valve

(30) Priorität: 12.10.1999 DE 19949136
(43) Veröffentlichungstag der Anmeldung: 30.05.2001
(73) Patentinhaber: Danfoss A/S, 6430 Nordborg (DK)
(72) Erfinder: Seerup, Jorgen, 8320 Marslet (DK); Nielsen, Kuno, 8600 Silkeborg (DK); Larsen, Hans Erik, 8000 Aarhus C (DK)
(74) Vertreter: Knoblauch, Andreas, Dr.-Ing.

(56) Entgegenhaltungen:
- US-A- 3 860 169
- US-A- 5 033 713
- PATENT ABSTRACTS OF JAPAN vol. 1998, no. 02, 30. Januar 1998 (1998-01-30) & JP 09 273835 A (TGK CO LTD), 21. Oktober 1997 (1997-10-21)

## Beschreibung

Die Erfindung bezieht sich auf einen Betätigungsaufsatz für ein Ventil, mit einem auf das Ventilgehäuse aufspannbaren Träger, einem am Träger montierten thermischen Dehnstoffelement, wie Wachspatrone, das ausgangsseitig ein Stellglied zur Verstellung eines Ventilstiftes aufweist, einem dem Dehnstoffelement benachbarten elektrischen Heizelement und einer Steuerschaltung zur Steuerung der Beheizung in Abhängigkeit von einer die Öffnungsstellung des Ventils bestimmenden Steuerspannung.

Solche mit einer beheizbaren Wachspatrone arbeitende Betätigungsaufsätze sind bekannt, beispielsweise durch US-A-3 860 169 oder den auf dem Markt befindlichen Thermoaktuator Typ ABNM, 0-10 V der Danfoss A/S. Wenn dieser Betätigungsaufsatz auf einem Ventil montiert ist, kann die Öffnungsstellung des Ventils in Abhängigkeit von einer durch einen Regler vorgegebenen Steuerspannung eingestellt werden. Bei diesem Thermoaktuator führt eine Steuerspannung von 0 bis 10 V zu einem Ventilhub von zum Beispiel 0 bis 3 mm. Der jeweilige Hub entspricht einer bestimmten Temperatur des Dehnstoffelements, die durch einen Temperaturfühler erfaßt wird. Die Steuerschaltung sorgt für eine solche Beheizung, daß die der aktuellen Steuerspannung entsprechende Dehnstofftemperatur konstant aufrechterhalten wird.

DE-A-1 673 457 zeigt einen Stellantrieb mit einem Dehnstoff-Element und einer elektrischen Heizung. Das Dehnstoff-Element betätigt einen Arbeitskolben, wenn es über eine Heizwicklung mit Wärme versorgt wird. Die Heizleistung, die das Dehnstoff-Element antreibt, wird über eine Rückführung einem Regler zugeführt, beispielsweise dadurch, daß am Dehnstoff-Element ein Thermoelement angeordnet ist, daß die Beheizung des Dehnstoff-Elements erfaßt.

DE-A-34 00 057 zeigt einen thermischen Stellantrieb mit einem Arbeitselement, das einen wärmeempfindlichen Dehnstoff enthält. Das Arbeitselement weist einen Stellkoben auf, der sich bei Wärmezufuhr aus dem Dehnstoff-Element herausbewegt und zwar gegen die Kraft einer Rückstellfeder, die den Arbeitskolben bei Absinken der Temperatur wieder in das Dehnstoff-Element zurückschiebt. Das Arbeitselement ist durch eine Heizeinrichtung beheizt, die über einen Schwellwertschalter gesteuert ist. Der Schwellwertschalter wird durch eine Leuchtdiode gesteuert, die einer Leuchtdiodenkaskade gegenüberliegt. Die Leuchtdiodenkaskade wird so angesteuert, daß ihre Leuchtdioden ein Leuchtband eine vorbestimmten Länge bilden. Ein Regler ist vorgesehen, der das Arbeitselement so beheizt, daß sich die Leuchtdiode immer an der Grenze zwischen dem beleuchteten und dem unbeleuchteten Bereich der Leuchtdiodenkaskade befindet.

Diese Aufgabe wird erfindungsgemäß dadurch gelöst, daß eine Positionsmeßvorrichtung vorgesehen ist, die in Abhängigkeit von der Lage des Stellglieds oder eines von ihm verstellbaren Bauteils ein Lagesignal abgibt, und daß die Steuerschaltung die Beheizung in Abhängigkeit von Steuersignal und Lagesignal steuert.

Dieser Vorschlag beruht auf der Überlegung, daß die heute auf dem Markt befindlichen Dehnstoffelemente erhebliche Toleranzunterschiede aufweisen und gleiche Temperaturen nicht immer zu den gleichen Öffnungsstellungen der Ventile führen. Wählt man aber die erfindungsgemäß vorgesehene Positionsmeßvorrichtung, so kommt es bei der Beheizung nicht mehr auf die Temperatur des Dehnstoffes an, sondern nur noch auf die Lage des Stellglieds, die sich sehr genau erfassen läßt. Es gibt keine Zwischenberechnung zwischen der Wachstemperatur und der Position des Ventilstifts, wie es beim Stand der Technik der Fall ist, wobei die Temperatur der Wachspatrone gemessen und in eine Stiftposition umgewandelt wird. Obwohl die eigentlich interessierende Größe die Öffnungsstellung des Ventils ist, kann die Positionsmeßvorrichtung vollständig im Betätigungsaufsatz untergebracht werden, so daß dieser Aufsatz alle für den Beheizungs-Regelkreis wesentlichen-Teile aufweist.

Günstig ist es, daß die Positionsmeßvorrichtung ein mit dem Träger verbundenes erstes Teil und ein mit dem Stellglied oder einem von ihm verstellbaren Bauteil verbundenes zweites Teil aufweist, die einander benachbart und parallel zur Trägerachse relativ zueinander bewegbar sind. Die beiden Teile der Positionsmeßvorrichtung können daher mit bereits vorhandenen Bauteilen verbunden werden, so daß sich kein großer zusätzlicher Aufwand ergibt.

Von Vorteil ist es, daß das zweite Teil mit einem vom Stellglied verstellbaren Ausgangselement, das am freien Ende eine der Betätigung des Ventilstiftes dienende Kupplungsfläche trägt, verbunden ist. Das Ausgangselement kann die Position des Ventilstiftes besonders leicht erfassen.

Vorzugsweise ist dafür gesorgt, daß die Positionsmeßvorrichtung ein linear arbeitender Differentialtransformator ist, dessen koaxial angeordnete Primär- und Sekundärwicklungen das eine Teil und dessen stabförmiger Kern das andere Teil bilden. Solche Differentialtransformatoren sind im vorliegenden Fall besonders geeignet, weil sie eine geringe Größe haben und daher im Betätigungsaufsatz untergebracht werden können.

Hierbei ist es empfehlenswert, daß zwei axial versetzte und gegenphasig geschaltete Sekundärwicklungen vorgesehen sind. Durch diese Schaltungsart werden Störspannungen weitgehend ausgeschaltet.

Bei einer bevorzugten Ausführungsform ist dafür gesorgt, daß die Steuerschaltung eine Platine aufweist, die seitlich neben und parallel zur Trägerachse trägerfest montiert ist, und daß das eine Teil an der Platine und das andere Teil an einem die Platine untergreifenden Teil des Ausgangselements angeordnet sind. Diese Konstruktion ermöglicht es, lediglich durch Hinzufügen der beiden Teile der Positionsmeßvorrichtung die gewünschte Lagereglung vornehmen zu können, so daß bisher vorgesehene Bauteile weiter verwendet werden können.

Hierbei empfiehlt es sich, daß die Wicklungen an der Platine und der stabförmige Kern am Ausgangselement angeordnet ist. Die Anschlüsse der Wicklungen können direkt auf der Platine vorgesehen werden und werden im Betrieb nicht belastet.

Die Erfindung wird im folgenden anhand eines bevorzugten Ausführungsbeispiels in Verbindung mit der Zeichnung näher beschrieben. Hierin zeigen:
- Fig. 1: einen Längsschnitt durch einen erfindungsgemäßen Betätigungsaufsatz,
- Fig. 2: einen vereinfachten Querschnitt durch den Betätigungsaufsatz der Fig. 1,
- Fig. 3: ein Schaltbild eines als Positionsmeßvorrichtung dienenden Differentialtransformators,
- Fig. 4: einen Schnitt durch die Wickelanordnung der Fig. 3,
- Fig. 5: eine bruchstückhafte Darstellung eines Ausgangselements mit stabförmigem Kern und
- Fig. 6: eine Darstellung einer Platine einer Steuervorrichtung.

Der veranschaulichte Betätigungsaufsatz weist einen Träger 1 mit einer Spannvorrichtung 2 zur Befestigung an einem Ventilgehäuse auf. Ein thermisches Dehnstoffelement 3 ist mit seinem Gehäuse 4 am Träger 1 fixiert. Ausgangsseitig ist ein Stellglied 5 in der Form eines Kolbens vorgesehen, das über Übertragungsmittel 6, die mindestens ein Ausgangselement 7 aufweisen, auf eine Kupplungsfläche 8 wirken, die am freien Ende der Übertragungsmittel 6 vorgesehen ist und bei montiertem Betätigungsaufsatz auf einen Ventilstift des zu betätigenden Ventils wirkt.

Dem Dehnstoffelement 3 ist ein elektrisches Heizelement H benachbart, beispielsweise ein ohmscher Widerstand. Durch Beheizung ändert sich die Temperatur des Dehnstoffs und damit dessen Volumen. Entsprechend wird das Stellglied 5 und damit die Öffnungsstellung des zugehörigen Ventils verstellt. Dem Betätigungsaufsatz wird über einen Stecker 9, der nur gestrichelt angedeutet ist, eine Versorgungsspannung, die den Heizstrom liefert, und eine Steuerspannung zugeführt, die von Hand oder von einem Regler vorgegeben ist und die Öffnungsstellung des zugehörigen Ventils bestimmt. Zur elektrischen Einrichtung gehört ferner eine Platine 10, die an ständerfesten Teilen befestigt ist, und eine Positionsmeßvorrichtung 11, die ein Lagesignal in Abhängigkeit von der Stellung des Stellgliedes 5 abgibt.

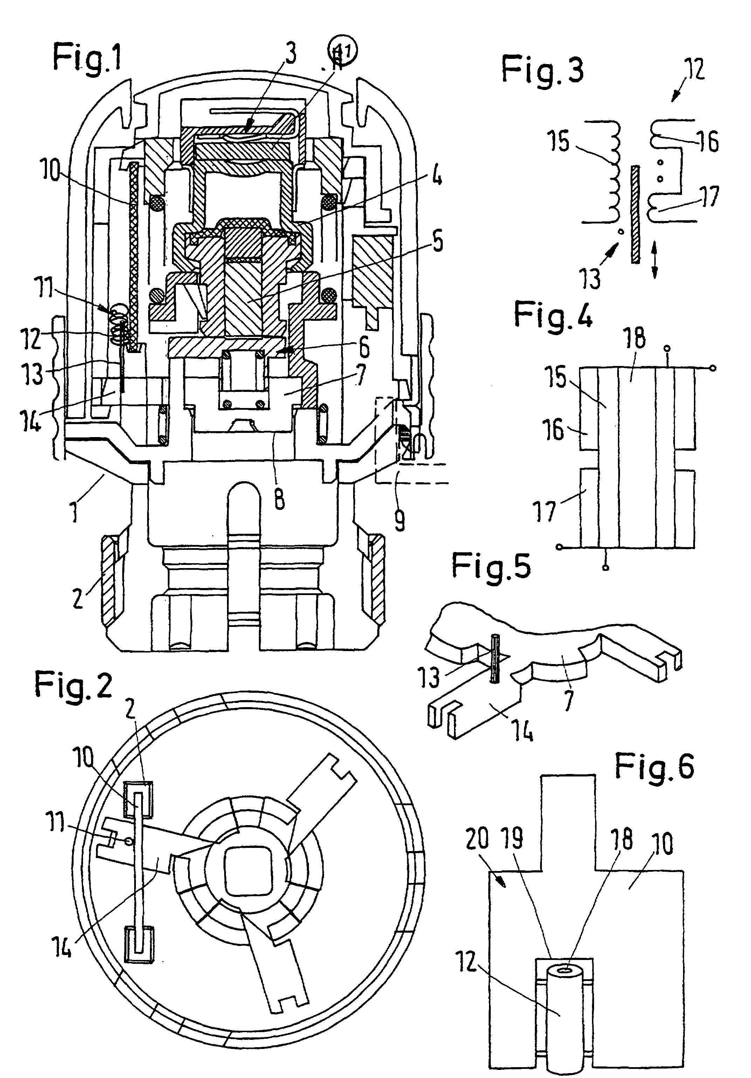

Die Positionsmeßvorrichtung 11 besteht aus einem ersten Teil 12, das an der Platine 10 befestigt ist, und einem zweiten Teil 13, das an einem Arm 14 des Ausgangselements 7 angebracht ist. Die Positionsmeßvorrichtung 11 ist ein linear arbeitender Differentialtransformator, bei dem das erste Teil 12 durch eine Primärwicklung 15 und zwei gegenphasig geschaltete Sekundärwicklungen 16 und 17 und das zweite Teil 13 durch einen parallel zur Trägerachse verstellbaren stabförmigen Kern, beispielsweise einen Stahlstift, gebildet ist. Fig. 4 zeigt, daß die Wicklungen 15, 16 und 17 Zylinder sind, die einen Hohlraum 18 für den Durchtritt des zweiten Teils 13, also des stabförmigen Kerns, aufweisen. Gemäß Fig. 6 weist die Platine 10 einen Ausschnitt 19 auf; in dem das Teil 12 aufgenommen und befestigt ist. Zweckmäßigerweise sind sämtliche Teile der zugehörigen Steuerschaltung 20 auf der Platine 10 vereinigt (was nicht im einzelnen dargestellt ist).

Die Arbeitsweise der neuen Einheit ist wie folgt. Ein Raumtemperaturfühler registriert die Raumtemperatur und vergleicht sie mit dem am Raumthermostaten eingestellten Sollwert. Die Abweichung ergibt einen ΔT-Wert, und aufgrund eines Algorithmus, der in der Software liegt, berechnet diese Software eine gewünschte Hubhöhe des Ventils, die der Wassermenge entspricht, die erforderlich ist, um ΔT zu reduzieren. Die Elektronik registriert dann die tatsächliche Hubhöhe des Ventils und regelt danach die Stromzufuhr zum Heizwiderstand, der die Wachspatrone beheizt und eine Bewegung des Ventilstiftes verursacht. Die Regelschleife wird dann so weiterarbeiten (Position messen, mit gewünschter Position vergleichen und die Wärmezufuhr entweder erhöhen oder unterbrechen), bis die gewünschte Hubhöhe erreicht ist, oder ein neuer Raumtemperatur-Sollwert eingestellt wird.

Der Innenaufbau des Betätigungsaufsatzes kann im übrigen eine beliebige Form haben. Es spielt keine Rolle, ob es sich um ein normalerweise offenes Ventil (NO-Type) oder ein normalerweise geschlossenes Ventil (NC-Type) handelt. Toleranzunterschiede bei den einzelnen Dehnstoffelementen 3 spielen keine Rolle, da sie durch die Lageregelung ausgeglichen werden. Das Gleiche gilt für unterschiedliche Umgebungstemperaturen, die bisher einen störenden Einfluß auf das Stellverhalten der Dehnstoffelemente hatten. In machen Fällen genügt es auch, wenn bei der Positionsmeßvorrichtung 11 nur eine Sekundärwicklung vorgesehen ist. Die Positionsmeßvorrichtung kann auch auf andere Art und Weise arbeiten, beispielsweise optisch.

## Patentansprüche

1. Betätigungsaufsatz für ein Ventil, mit einem auf das Ventilgehäuse aufspannbaren Träger, einem am Träger montierten thermischen Dehnstoffelement, wie Wachspatrone, das ausgangsseitig ein Stellglied zur Verstellung eines Ventilstiftes aufweist, einem dem Dehnstoffelement benachbarten elektrischen Heizelement und einer Steuerschaltung zur Steuerung der Beheizung in Abhängigkeit von einer die Öffnungsstellung des Ventils bestimmenden Steuerspannung, **dadurch gekennzeichnet, daß** eine Positionsmeßvorrichtung (11) vorgesehen ist, die die Lage des Stellgliedes (5) erfaßt und in Abhängigkeit von der Lage des Stellglieds (5) oder eines von ihm verstellbaren Bauteils ein Lagesignal abgibt, und daß die Steuerschaltung (20) die Beheizung in Abhängigkeit von Steuersignal und Lagesignal steuert.

2. Betätigungsaufsatz nach Anspruch 1, **dadurch gekennzeichnet, daß** die Positionsmeßvorrichtung (11) ein mit dem Träger (1) verbundenes erstes Teil (12) und ein mit dem Stellglied (5) oder einem von ihm verstellbaren Bauteil verbundenes zweites Teil (13) aufweist, die einander benachbart und parallel zur Trägerachse relativ zueinander bewegbar sind.

3. Betätigungsaufsatz nach Anspruch 2, **dadurch gekennzeichnet, daß** das zweite Teil (13) mit einem vom Stellglied (5) verstellbaren Ausgangselement (7), das am freien Ende eine der Betätigung des Ventilstiftes dienende Kupplungsfläche (8) trägt, verbunden ist.

4. Betätigungsaufsatz nach einem der Ansprüche 1 bis 3, **dadurch gekennzeichnet, daß** die Positionsmeßvorrichtung (11) ein linear arbeitender Differentialtransformator ist, dessen koaxial angeordnete Primär- und Sekundärwicklungen (15, 16, 17) das eine Teil (12) und dessen stabförmiger Kern das andere Teil (13) bilden.

5. Betätigungsaufsatz nach Anspruch 4, **dadurch gekennzeichnet, daß** zwei axial versetzte und gegenphasig geschaltete Sekundärwicklungen (16, 17) vorgesehen sind.

6. Betätigungsaufsatz nach einem der Ansprüche 2 bis 5, **dadurch gekennzeichnet, daß** die Steuerschaltung (20) eine Platine (10) aufweist, die seitlich neben und parallel zur Trägerachse trägerfest montiert ist, und daß das eine Teil (12) an der Platine (10) und das andere Teil (3) an einem die Platine untergreifenden Teil des Ausgangselements (7) angeordnet sind.

7. Betätigungsaufsatz nach Anspruch 6, **dadurch gekennzeichnet, daß** die Wicklungen (15, 16, 17) an der Platine (10) und der stabförmige Kern am Ausgangselement (7) angeordnet ist.

## Claims

1. Operating device for a valve with a carrier, fixable on the valve housing, a thermal expansion element, e.g. a wax cartridge, fitted on the carrier, said element having on its outlet side a regulating unit for the displacement of a valve pin, an electrical heating element next to the thermal expansion element, and a control switch for controlling the heating in dependence of a control voltage determining the opening position of the valve, **characterised in that** a position-measuring device (11) is provided, which determines the position of the regulating unit (5) and supplies a position signal in dependence of the position of the regulating unit (5) or of a component displaceable by the regulating unit (5), and that the control switch (20) controls the heating in dependence of control signal and position signal.

2. Operating device according to claim 1, **characterised in that** the position-measuring device (11) has a first part (12) connected with the carrier (1) and a second part (13) connected with the regulating unit (5) or a component displaceable by the regulating unit (5), the two parts being adjacent to each other and movable in relation to each other in parallel to the carrier axis.

3. Operating device according to claim 2, **characterised in that** the second part (13) is connected with an outlet element (7) displaceable by the regulating unit (5), said element (7) having on its free end a coupling face (8) for operating the valve pin.

4. Operating device according to one of the claims 1 to 3, **characterised in that** the position-measuring device (11) is a linearily working differential transformer, whose coaxially arranged primary and secondary windings (15, 16, 17) form the first part (12) and whose rod-shaped core forms the second part (13).

5. Operating device according to claim 4, **characterised in that** two axially offset and counter-phase connected secondary windings (16, 17) are provided.

6. Operating device according to one of the claims 2 to 5, **characterised in that** the control switch (20) has a PCB (10), which is fixed on the carrier beside and in parallel to the carrier axis, and that the first part (12) is arranged on the PCB (10) and the second part (13) is arranged on a part of the outlet element (7) engaging under the PCB (10).

7. Operating device according to claim 6, **characterised in that** the windings (15, 16, 17) are arranged on the PCB (10) and the rod-shaped core is arranged on the outlet element (7).

## Revendications

1. Embout d'actionnement destiné à une valve, comprenant un support pouvant être bloqué sur le carter de ladite valve ; un élément consistant en une matière thermiquement expansible et monté sur ledit support, tel qu'une cartouche en cire, qui comporte un organe de réglage côté sortie, en vue de déplacer un pointeau obturateur ; un élément chauffant électrique, voisin de l'élément en une matière thermiquement expansible ; et un circuit de commande pour commander le chauffage en fonction d'une tension de commande déterminant la position d'ouverture de la valve, **caractérisé par le fait qu'**il est prévu un dispositif (11) mesureur de positions qui détecte la position de l'organe de réglage (5), puis délivre un signal de position en fonction de la position dudit organe de réglage (5) ou d'une pièce structurelle pouvant être déplacée par ce dernier ; et **par le fait que** le circuit de commande (20) commande le chauffage en fonction du signal de commande et du signal de position.

2. Embout d'actionnement selon la revendication 1, **caractérisé par le fait que** le dispositif (11) mesureur de positions comprend une première partie (12) reliée au support (1) et une seconde partie (13) reliée à l'organe de réglage (5), ou à une pièce structurelle pouvant être déplacée par ce dernier, lesdites parties étant voisines l'une de l'autre, et étant mobiles l'une par rapport à l'autre vis-à-vis de l'axe dudit support.

3. Embout d'actionnement selon la revendication 2, **caractérisé par le fait que** la seconde partie (13) est reliée à un élément de sortie (7) pouvant être déplacé par l'organe de réglage (5) et portant, à l'extrémité libre, une surface d'accouplement (8) servant à l'actionnement du pointeau obturateur.

4. Embout d'actionnement selon l'une des revendications 1 à 3, **caractérisé par le fait que** le dispositif (11) mesureur de positions est un transformateur différentiel à fonctionnement linéaire dont les enroulements primaire et secondaires (15, 16, 17) agencés coaxialement forment l'une (12) des parties, et dont le noyau configuré en un barreau forme l'autre partie (13).

5. Embout d'actionnement selon la revendication 4, **caractérisé par** la présence de deux enroulements secondaires (16, 17), décalés axialement et branchés en opposition de phase.

6. Embout d'actionnement selon l'une des revendications 2 à 5, **caractérisé par le fait que** le circuit de commande (20) présente une platine (10) qui est montée rigidement sur le support, en juxtaposition latérale et parallèlement à l'axe dudit support ; et **par le fait que** l'une (12) des parties est disposée sur la platine (10), et l'autre partie (3) est disposée sur une partie de l'élément de sortie (7) qui emprisonne ladite platine par-dessous.

7. Embout d'actionnement selon la revendication 6, **caractérisé par le fait que** les enroulements (15, 16, 17) se trouvent sur la platine (10), et le noyau en forme de barreau se trouve sur l'élément de sortie (7).
